# EUROPEAN PATENT APPLICATION

(11) **EP 4 502 897 A1**
(43) Date of publication of application: **05.02.2025**
(21) Application number: 24179612.7
(22) Date of filing: 03.06.2024
(51) Int. Cl.: G06Q 10/0833

(54) **PARCEL TRACKING SYSTEM**

(30) Priority: 01.08.2023 IT 202300016239
(71) Applicant: H&S Engineering S.r.l., 20122 Milano MI (IT)
(72) Inventor: RAPACIOLI, Luca, 20122 Milano (IT)
(74) Representative: Zermani Biondi Orsi, Umberto

(57) **Abstract**

A parcel tracking system comprises at least one detection device (1), provided with a containment body (2), a processing unit (4) housed in said containment body (2), a first, brightness, sensor (6), a second sensor (7), for detecting environmental parameters, a third, acceleration, sensor (9), and a fourth, localization, sensor, each configured to detect a respective first, second, third or fourth parameter. The system further comprises a remote server (11) and a remote electronic device (21) provided with a user interface module (22). The processing unit (4) of the detection device (1) is configured to send to the server (11) and/or to the electronic device (21) one or more signals having an informative content representative of the values of said first, second, third and fourth parameter. The electronic device (21) and/or the remote server (11) is configured to perform a processing cycle which envisages receiving one or more signals, comparing the value of the first, second, third and fourth parameters with the respective alarm thresholds, and recording, in a specific memory space, at least an identification data, representative of an adverse event, upon each exceedance of the alarm threshold by the relative first, second or third parameter.

## Description

The present invention relates to a parcel tracking system, viz., a system for tracking individual load units in logistics.

The main application of the present invention is therefore in the field of logistics and transport, particularly in the area of monitoring the status of shipments of valuable products.

In recent years, the logistics and home delivery sector has undergone considerable expansion, with transport companies and couriers delivering various kinds of products to any location which can be reached by road, air or ship.

It is not uncommon for these deliveries to also involve valuable products, such as electronic devices (smart TVs, Smartphones) or jewellery, which sometimes arrive at their destination damaged or otherwise in an imperfect condition, without it being possible to identify where the damage occurred along the transport chain; furthermore, many of the valuable products sent are temperature-sensitive and are not always kept within temperature and/or humidity limits throughout the transport.

This clearly leads to dissatisfaction on the part of the recipient, but at the same time causes a problem of determining responsibilities among the various subjects which were part of the distribution chain.

Unfortunately, to date, the available technologies only allow the tracking and geolocalization of a package or parcel by correlating information related to the (geolocalized) location of the transport vehicle and the code of the parcel, previously scanned, without it being possible to check the state of the parcel or attribute any responsibility in the event of damage.

It is therefore the aim of the present invention to provide a parcel tracking system which is capable of overcoming the above-mentioned drawbacks of the prior art.

In particular, it is the aim of the present invention to provide a simple and highly reliable parcel tracking system which allows an effective monitoring and precise reconstruction of events occurring at each step of the delivery.

Said aims are achieved by a parcel tracking system which has the characteristics of one or more of the following claims.

In particular, said aims are achieved by a parcel tracking system provided with at least one detection device, a remote server and an electronic device. Preferably, the detection device comprises a containment body, a processing unit housed in said containment body, a transceiver connected to the processing unit and a battery pack and/or a power supply unit connectable to a an electrical network housed in the containment body.

Preferably, the detection device further comprises a first, brightness, sensor, connected to the processing unit, housed in the containment body and facing outside it to detect a first parameter representative of the brightness of an environment in which the device is immersed, in order to know whether or not the parcel has been opened during transport.

Preferably, the detection device further comprises one or more second sensors, for the detection of environmental parameters, connected to the processing unit, housed in the containment body and configured to measure one or more second parameters representative of at least a temperature and of a degree of humidity of the environment in which the device is immersed.

Preferably, the detection device further comprises a third, acceleration, sensor configured to detect a third parameter representative of lateral acceleration (preferably in three-dimensional space) to which said detection device is subjected.

Preferably, the detection device further comprises a fourth, localization, sensor, housed in the containment body and configured to detect a fourth parameter representative of an instantaneous geographical position of the containment body.

Preferably, the detection device is configured to send to said server and/or to said electronic device one or more signals having an informative content representative of the values of said first, second, third and fourth parameter. Preferably, the remote electronic device (e.g., smartphone, notebook, tablet, etc.) is provided with a user interface module.

The electronic device is preferably connected to the detection device by means of said remote server and through a wireless communication network (2G, 3G, 4G, 5G and subsequent).

According to an aspect of the invention, the electronic device or remote server is configured to perform a processing cycle which envisages a succession of steps.

In fact, the data processing can be performed remotely, server-side, or possibly locally, by the electronic device itself. Preferably, the processing is performed server-side.

Preferably, the processing cycle envisages receiving said one or more signals.

Preferably, the processing cycle envisages comparing the first, second and third parameter values with respective alarm thresholds (or alarm threshold values).

Preferably, the processing cycle envisages recording, in a specific memory space, at least an identification data, representative of an adverse event, upon each exceedance of the alarm threshold by the relative first, second or third parameter, where said identification data has an informative content containing at least the value of the first, second or third parameter correlated to a corresponding value of the fourth parameter.

Preferably, moreover, the electronic device is configured to display, to a remote user and through said user interface module, a list of said data. Advantageously, thanks to such a combination of characteristics, it is possible for a user to monitor the status of the parcel during delivery and at the same time identify possible hazardous situations (adverse events) which can be addressed both in real time and *ex post,* in a verification step due to a complaint by the recipient.

The dependent claims herein incorporated for reference, correspond to different embodiments of the invention.

Further characteristics and advantages of the present invention will become more apparent from the approximate and thus non-limiting description of a preferred, but not exclusive, embodiment of a parcel tracking system, as shown in the accompanying drawings, where:

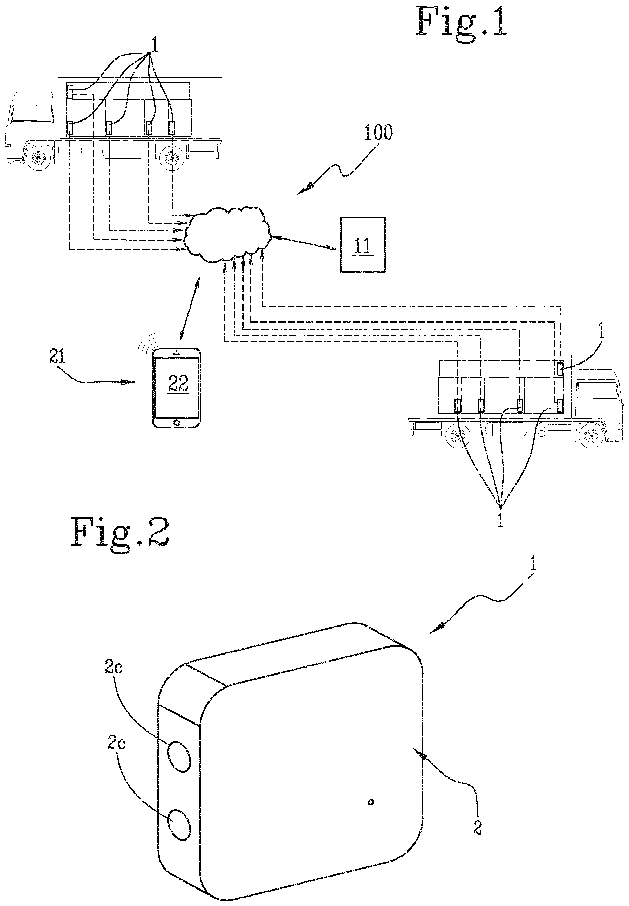

- figure 1 schematically illustrates a parcel tracking system in accordance with the present invention;
- figure 2 shows a perspective view of a detection device for the parcel tracking system of figure 1;

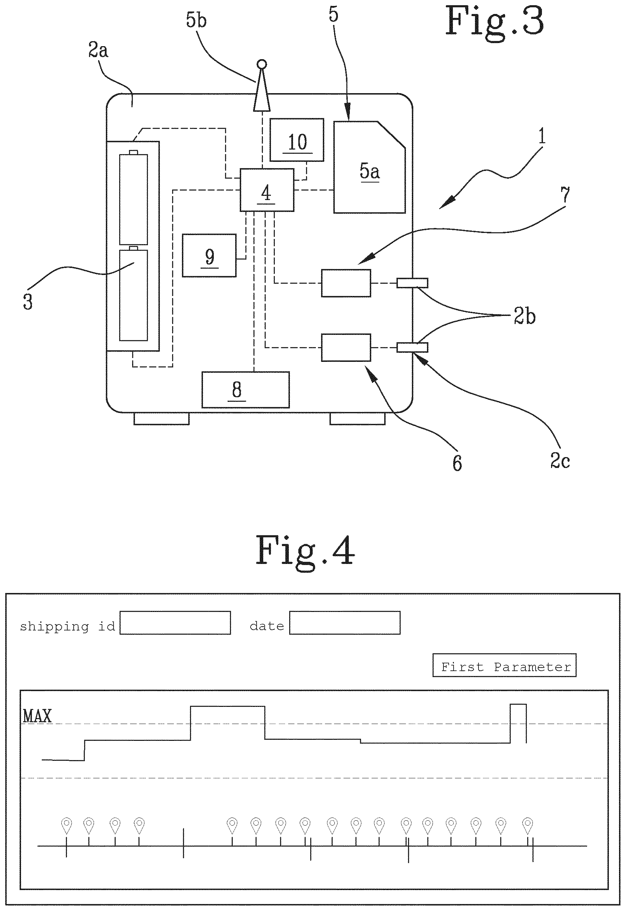

- figure 3 shows a functional diagram of the detection device of figure 2;
- figure 4 shows a video interface of the parcel tracking system of figure 1.

With reference to the attached figures, a parcel tracking system in accordance with the present invention is indicated overall with 100.

The term 'parcels' is understood in the present text to mean a single load unit or a separate package/packaging unit of one or more items which can be transported independently.

The term parcel therefore identifies packages, boxes, cartons which are used to contain and transport goods from a place of departure to a place of delivery.

The parcel tracking system 100 is preferably provided with at least one detection device 1, a remote server 11 and an electronic device 21.

Preferably, the electronic device 21 comprises a user interface module 22. In the preferred embodiment, the electronic device 21 is defined by a smartphone, tablet or notebook or personal computer.

Preferably, the system 100 comprises a plurality of detection devices 1, each configured to communicate with said remote server 11 and one or more electronic devices 21.

The detection device 1 comprises a containment body 2 inside which the electronics are housed.

The containment body 2 is preferably defined by a moulded plastic case delimiting an internal housing volume 2a of one or more electronic boards and at least one battery pack 3.

Preferably, the containment body 2 has a box-like shape and a volume of less than 320 cm³ in order to be easily insertable into any parcel or package. Such a containment body 2 is also provided with at least one window 2b which is permeable to light, such as to allow light radiation to pass inside the volume 2a.

In the preferred embodiment, the containment body 2 has two substantially polygonal, preferably rectangular, half-shells (with rounded corners) joined together and provided with one or more supports at a respective lower edge. Said supports are shaped to hold the containment body 2, hence the device, in an upright position, viz., with the polygonal faces of the half-shells oriented vertically.

Alternatively, reversible coupling systems configured to allow the stable placement of the containment body inside a parcel can be provided.

A section is also provided for housing the battery pack 3 and/or a power supply unit which can be connected to an electrical network.

Preferably, both options are envisaged, with the housing for the battery pack 3 connected in parallel (or sometimes in series) to the power supply unit. As mentioned, all the electronics of the device are housed inside the containment body 2, including a processing unit 4 and a transceiver 5. The transceiver 5 is connected to the processing unit 4 and is provided with a housing portion 5a for a smart-card SC and at least one antenna 5b for long-range wireless data transmission.

Preferably, the transceiver is defined by an NB loT (Narrow Band Internet of Things) module configured to exploit the LPWAN (Low Power Wide Area Network) radio technology standard such as to enable a low data flow communication with a broad category of devices.

In accordance with this, the smart-card SC is defined by a specific NB loT SIM.

Advantageously, this allows to have broad coverage while maintaining very low power consumption, ideal for monitoring systems which need to ensure continuous functionality for long intervals of time even in the absence of network power (not necessarily available).

Preferably, in this regard, the processing unit 4 is selectively switchable between a first resting and low energy consumption mode and a second, measurement and high energy consumption mode.

Preferably, the processing unit 4 is normally in the first mode and configured to switch from the first to the second mode only to perform a measurement procedure at pre-established time intervals (as will be better explained below).

In a condition of normal use, therefore, the device 1 works almost all the time in the first mode (sleep mode), 'waking up' at regular, pre-established intervals only for the time needed to collect environmental parameters. Preferably, moreover, the processing unit 4 is integrated in the transceiver 5.

In the preferred embodiment, the detection device 1 is further provided with an electricity consumption meter (not illustrated), configured to detect the electricity consumption continuously over time.

A further, optional characteristic of the device 1 is that of providing one or more visual interface elements, such as LEDs or similar, facing outside the containment body 2 and configured to provide coloured information representative of the operating status of the device 1, making it advantageously monitorable also from a distance.

The detection device 1 further comprises a first, brightness, sensor 6, connected to the processing unit 4, housed in containment housing 2 and facing it outside through the window 2b.

Such a first sensor 6 is configured to detect a first parameter representative of the brightness of the environment in which the device is immersed.

The first sensor 6 is thus configured to assess the brightness in a given environment, detecting values within a scale preferably ranging from a minimum of 600ms to a maximum of 4800ms.

Advantageously, the presence of the first sensor allows to detect the opening of the parcel/package in which the detection device 1 is placed, identifying an increase in brightness with respect to a transport condition, in which the brightness is low (the interior of the parcel is normally devoid of light).

The presence of one or more second sensors 7 is envisaged, for the detection of environmental parameters, housed in the containment body 2, connected to the processing unit 4 and configured to measure a plurality of quantities representative of environmental parameters, respectively. Preferably, there is one second sensor 7 and it is configured to measure one or more second parameters representative of at least one temperature and one degree of humidity of the environment in which the device is immersed.

Alternatively, there could be several sensors provided, configured to each measure a respective second parameter.

More preferably, such second parameters are representative of one or more of the following aspects:
- temperature,
- pressure
- degree of humidity of the environment in which the device is immersed 1;
- air quality of the environment in which the device is immersed 1.

In the preferred embodiment, such a second sensor 7 integrates at least the temperature and humidity detection.

More preferably, the second sensor 7 integrates all the functions listed above.

In other words, the second sensor 7 comprises a single chip, known per se, capable of detecting a plurality of quantities of interest; in more detail, the signal related to air quality is sent to the processing unit and then processed by means of a particular algorithm which takes into account the various concentrations provided by the sensor, and four types of measurement can be made.

In the preferred embodiment, moreover, the device 1 comprises a third sensor 8, housed in the containment body 2, connected to the processing unit 4 and configured to detect a third parameter representative of a lateral acceleration (preferably three-dimensional) to which said containment body is subjected.

Preferably, the third sensor 8 is selectively switchable between a first mode of operation, semi-alert, and a second mode of operation, fully operational, and is configured to switch from the first mode to the second mode as soon as an oscillation occurs which exceeds a certain activation threshold.

In other words, the third sensor 8 is calibrated to always remain in semi-alert mode (first mode) ready to enter full power mode (second mode) as soon as an oscillation exceeding a certain threshold occurs. From that instant on, the third sensor switches to the second mode of operation to sample at its maximum performance (about 1000 samples per second) so as to record the event in question.

It should be noted that, preferably, such a third sensor 8 is configured to generate an oscillation signal representative of said oscillation detection and to send said oscillation signal (along one or more, preferably three, directions) to the processing unit 4.

Preferably, such a third sensor 8 is defined by an accelerometer.

The device 1 further comprises a fourth, localization, sensor 9, housed in the containment body 2 and configured to detect a fourth parameter representative of an instantaneous geographical position of the containment body 2.

The fourth sensor 9 preferably comprises a satellite receiver (not illustrated) configured to detect a (geographical) position of the detection device 1. Such a satellite receiver is provided with a GPS module (or similar) and a GPS antenna (or similar) connected together.

It should be noted that the term 'GPS' is not intended to strictly identify the 'Global Positioning System' alone, but also alternative and/or equivalent systems which have been and/or will be developed (GLONASS, COMPASS, BeiDou, etc.).

In fact, the third communication means could be defined by any receiver capable of processing satellite or other signals to determine the geographical position of the detection device 1.

The processing unit 4 of the detection device 1 is therefore configured to send to said server 11 and/or to said electronic device 21 one or more signals having an informative content representative of the values of said first, second, third and fourth parameter.

Preferably, in this regard, the detection device 1 comprises a memory card 10 housed in said containment body 2, preferably (but not necessarily) a flash-type memory.

The processing unit 4 of the detection device 1 is thus configured to maintain the first (rest) mode, therefore to assume a 'normally' inactive condition, and to switch from the first to the second (operational) mode with a first pre-set time frequency.

In the second mode, the first sensor 6 and said one or more second sensors 7 detect the values of said first and second parameters in real time.

The processing unit 4 is therefore configured to store the detected values of said first, second parameter within said memory card 10.

In the preferred embodiment, moreover, the processing unit 4 of the detection device 1 is configured to switch from the first to the second mode when the third sensor 8 detects a value of the third parameter above an activation threshold.

More preferably, the processing unit 4 of the detection device 1 is configured to switch from the first to the second mode when the third sensor 8 is in the second mode.

Therefore, as soon as the third sensor 8 detects an oscillation or acceleration exceeding the activation threshold, it preferably switches from the first to the second mode and sends an activation signal representative of this exceedance to the processing unit 4, which then switches from the first to the second mode.

Preferably, therefore, the processing unit 4, having activated the second mode in response to the activation signal, is configured to store the values of said first, second and third parameters detected by the first 6, by the second 7 and by the third 8 sensors within said memory card 10.

In other words, the processing unit 4 is thus configured to start a measurement procedure with the remaining sensors (first 6 and second 7) upon receipt of said oscillation signal.

Advantageously, the device 1 is thereby capable of monitoring the environment inside the parcel/package at predefined intervals, but can also intervene with appropriate measurements in the event of unpredictable events such as falls or sudden shocks.

Furthermore, considering that the activation threshold is set so as to activate the sensor when the parcel is transferred from one transport unit (e.g., plane, ship, train, lorry, van) to the next, in the moment when the same is necessarily moved and subjected to lateral accelerations (preferably three-dimensional).

This advantageously allows to monitor the treatment of the package/parcel by the operators in the steps which are most commonly risky in terms of damage.

Preferably, moreover, the processing unit 4 of the detection device 1 is configured to detect the value of said fourth parameter (viz., the location) at a second, predetermined time frequency by means of the fourth sensor 9. At this point, the processing unit 4 is configured to send (by means of the transceiver 5) and with said second pre-set time frequency, said one or more signals to said server 11 and/or to said electronic device 21. Therefore, in the absence of lateral accelerations exceeding the activation value, therefore in the moments when the parcel tends to be in the hold or in transit within a cargo bay, the detections are performed in accordance with the first pre-set frequency and the sending of said one or more signals with the second pre-set frequency.

In the transfer steps, on the other hand, the detection device 1 is configured to activate itself automatically in response to the exceedance of the activation threshold by the third parameter, thus detecting in real time the most critical steps of the transport, which cannot be set a priori.

In the preferred embodiment, the second time frequency is lower than the first time frequency, preferably a sub-multiple of the first time frequency. By way of example, the first time frequency is preferably comprised in the range of 3-20 times/hour, while the second time frequency is preferably comprised in the range of 0.2-2 times/hour.

The electronic device 21 and/or the remote server 11, in turn preferably comprise a data reception module and a CPU configured to analyse and process the received data, displaying the results of the processing to the user.

According to an aspect of the invention, the electronic device 21 and/or remote server 11 is configured to perform a processing cycle which envisages receiving and processing the one or more signals generated by the detection device 1.

Preferably, it is the CPU (of the electronic device 21 and/or the remote server 11) which is configured to perform a processing cycle which envisages receiving and processing the one or more signals generated by the detection device 1.

Preferably, the processing cycle first envisages receiving said one or more signals from the detection device 1 (transmitted by means of the transceiver 5).

At this point, the CPU is configured to compare the value of the first, second and third parameters with respective alarm thresholds, viz., pre-set values which detect the occurrence of an adverse event.

Said CPU is thus configured, within the processing procedure, to record, in a specific memory space, at least one identifying datum, representative of an adverse event, upon each exceedance of the alarm threshold by the relative first, second or third parameter.

It should be noted that said identification data has an information content which correlates at least the value of the first, second or third parameter with a corresponding value of the fourth parameter.

Preferably, each piece of identification data has an informative content containing:
- a value of the first, second and third parameter with respect to the corresponding alarm threshold;
- a value of the fourth parameter;
- a time identification.

Preferably, moreover, the processing procedure envisages that said identification data are made available and accessible by means of the user interface module 22 to a remote user.

Preferably, the electronic device 21 is configured to display a list of said identification data to the user.

In the preferred embodiment, the electronic device 21 is further configured to display to the user, through the user interface module 22, the trend of the first, second and third parameter over time and in correlation with said fourth parameter and the respective alarm threshold.

Advantageously, the user, be it the sender, the recipient or a logistics operator, can thereby easily and immediately identify the presence of any adverse events, their magnitude and the geographical and temporal location.

In this regard, it should be noted that preferably the electronic device 21 is configured to record a plurality of data identifying a plurality of adverse events of a different nature.

More preferably, the electronic device 21 is configured to record at least:
- a first identification data, representative of an opening of the parcel, whenever said first parameter exceeds a first alarm threshold;
- a second identification data, representative of a situation of danger linked to environmental factors such as temperature or humidity, whenever said second parameter exceeds a second alarm threshold;
- a third identification data, representative of an impact, whenever said third parameter exceeds a third alarm threshold.

The present invention achieves the proposed aims and obtains important benefits.

In fact, the presence of a detection device provided with sensors adapted to detect numerous parameters of the parcel and an electronic device configured to process the data highlighting the presence of adverse events allows to maximise the efficiency of shipment management, allowing anyone in the logistics chain to verify and identify the transport conditions of the parcel and any anomalies.

## Claims

1. Parcel tracking system, comprising:
- at least a detection device (1), provided with:
a containment body (2);
a processing unit (4) housed in said containment body (2);
a first, brightness, sensor (6), connected to the processing unit (4), housed in the containment body (2) and facing outside it to detect a first parameter representative of the brightness of an environment in which the device is immersed;
at least one second sensor (7), for the detection of environmental parameters, connected to the processing unit (4), housed in the containment body (2) and configured to measure one or more second parameters representative of at least a temperature and of a degree of humidity of the environment in which the device (1) is immersed;
a third, acceleration, sensor (9) configured to detect a third parameter representative of a lateral acceleration to which said detection device (1) is subjected;
a fourth, localization, sensor, housed in the containment body (2) and configured to detect a fourth parameter representative of an instantaneous geographical position of the containment body (2);
a battery pack (3) and/or a power supply unit connectable to an electrical network housed in the containment body;
- a remote server (11);
- a remote electronic device (21) provided with a user interface module (22), wherein:
- said processing unit (4) of the detection device (1) is configured to send to said server (11) and/or to said electronic device (21) one or more signals having an informative content representative of the values of said first, second, third and fourth parameter;
- said electronic device (21) and/or said remote server (11) is configured to perform a processing cycle that envisages:
- receiving said one or more signals;
- comparing the value of the first, second, third and fourth parameter with respective alarm thresholds;
- recording, in a specific memory space, at least an identification data, representative of an adverse event, upon each exceedance of the alarm threshold by the relative first, second or third parameter, wherein said identification data has an informative content containing the value of the first, second or third parameter correlated to a corresponding value of the fourth parameter,
- said electronic device (21) is configured to display, to a remote user and through said user interface module (22), a list of said information.

2. Parcel tracking system according to claim 1, wherein the electronic device (21) is configured to display to the user, through said user interface module (22), the trend of the first, second and third parameter over time and in correlation with said fourth parameter and the respective alarm threshold.

3. Parcel tracking system according to claim 1 or 2, wherein:
- said detection device (1) comprises a memory card (10) housed in said containment body (2);
- said processing unit (4) of the detection device (1) is selectively switchable between a first mode, of rest, and a second mode, of measurement and configured to:
- maintain the first mode;
- switch, with a first pre-set time frequency, from the first to the second mode in which the first and said one or more second sensors detect in real time the values of said first and second parameter and store the detected values of said first and second parameter within said memory card (10);
- detect, with a second pre-set time frequency and by means of the fourth sensor, the value of said fourth parameter;
- send, with said second pre-set time frequency, said one or more signals to said server (11) and/or to said electronic device (21).

4. Parcel tracking system according to claim 3, wherein said second time frequency is lower than said first time frequency, preferably a sub-multiple of the first time frequency.

5. Parcel tracking system according to any one of the preceding claims, wherein the third sensor (8) is selectively switchable between a first mode of operation, semi-alert, and a second mode of operation, fully operational, and is configured to switch from the first mode to the second mode as soon as an oscillation occurs that exceeds a certain activation threshold.

6. Parcel tracking system according to claims 3 and 5, wherein said processing unit (4) of the detection device (1) is configured to switch from the first to the second mode when the third sensor (9) is in the second mode and to store the detected values of said first, second and third parameter detected by the first (6), the second (7) and the third sensor (8) inside said memory card (10).

7. Parcel tracking system according to any one of the preceding claims, wherein the electronic device (21) and/or the server (11) is configured to record a plurality of data identifying a plurality of adverse events of a different nature.

8. Parcel tracking system according to claim 7, wherein the electronic device (21) and/or the remote server (11) is configured to record:
- a first identification data, representative of an opening of the parcel, whenever said first parameter exceeds a first threshold value;
- a second identification data, representative of a situation of danger linked to environmental factors such as temperature or humidity, whenever said second parameter exceeds a second threshold value;
- a third identification data, representative of an impact, whenever said third parameter exceeds a third threshold value.

9. Parcel tracking system according to any one of the preceding claims, wherein the detection device (1) has a box-like shape and a volume of less than 320 cm³ in order to be easily insertable into any package or packaging.

10. Parcel tracking system according to any one of the preceding claims, wherein each identification data has an informative content including:
- a value of the first, second and third parameter with respect to the corresponding threshold value;
- a value of the fourth parameter;
- a time identification.

11. Parcel tracking system according to any one of the preceding claims, comprising a plurality of detection devices (1), each configured to communicate with said electronic device (21).
